# EUROPEAN PATENT SPECIFICATION

(11) **EP 4 549 039 B1**
(45) Date of publication and mention of the grant of the patent: **02.12.2026**
(21) Application number: 24206458.2
(22) Date of filing: 14.10.2024
(51) Int. Cl.: B08B 9/032, F28G 9/00

(54) **CLEANING OF A CONDENSER IN A SYSTEM FOR HEAT TREATMENT OF LIQUID FOOD**
REINIGUNG EINES KONDENSATORS IN EINEM SYSTEM ZUR WÄRMEBEHANDLUNG VON FLÜSSIGEN NAHRUNGSMITTELN
NETTOYAGE D'UN CONDENSEUR DANS UN SYSTÈME DE TRAITEMENT THERMIQUE D'ALIMENTS LIQUIDES

(30) Priority: 30.10.2023 EP 23206627
(43) Date of publication of application: 07.05.2025
(73) Proprietor: Tetra Laval Holdings & Finance S.A., 1009 Pully (CH)
(72) Inventor: Vestberg, Staffan, 211 86 Lund (SE)
(74) Representative: Tetra Pak Patent Attorneys

(56) References cited:
- EP-A1- 0 220 347
- WO-A1-2017/103276
- CN-A- 111 735 317
- JP-A- 2008 020 118
- US-A- 2 671 729
- US-A- 4 366 003

## Description

### Technical Field

The invention generally relates to a method for performing cleaning of a system for heat treatment of liquid food. More particularly, it is related to a method for performing cleaning of a condenser in a system for heat treatment of liquid food. The invention also relates to a system for heat treatment of liquid food.

### Background Art

It is commonly known to use different types of systems for providing heat treatment of liquid food in the food processing industry, also known as ultra-high temperature (UHT) systems. These systems are typically used for sterilizing the liquid food as well as making the liquid food ready for distribution in an efficient but also safety way, in relation to requirements related to the food processing industry.

Within all food production, not least in the dairy industry, a meticulous cleaning of all production equipment is an imperative requirement for good production. Careless hygiene may involve serious consequences since food, especially dairy products, is a perfect nutrient bed where bacteria rapidly multiply. When the cleaning liquid passes past the surfaces which are to be cleaned, chemical and mechanical working of the residues on the surfaces takes place which is a necessity for good cleaning effect. Different equipment and plant parts with different contaminations and objects demand varying cleaning programs in order to obtain a satisfactory cleaning result. Thus, equipment used in the food processing industry need to be designed so that it can be efficiently cleaned. Typically, the equipment of the systems is sterilized before startup of the system and a full cleaning process is performed after shutdown of the system.

Even though system for heat treatment of liquid food and especially cleaning of such systems has been used in the food processing industry for decades, there is room for improvements for obtaining better and more efficient cleaning processes.

For these reasons, there is a demand for a cleaning solution that fulfills the requirements related to the food processing industry, e.g., hygienic design and food safety, at the same time as the cleaning process is efficient and reliable.

Document WO2017/103276 A1 discloses the cleaning of a system of heat treatment for liquid food.

### Summary

It is an object to at least partly overcome the one or more of the above-identified limitations of the prior art. In particular, it is an object to provide a method for efficiently performing cleaning of a condenser in a system for heat treatment of liquid food. The cleaning should preferably be performed under aseptic conditions such that the system is kept sterile during the cleaning. According to embodiments of the disclosure, other objects may be to reduce the production downtime for the system.

According to a first aspect, a method for performing cleaning of a condenser in a system for heat treatment of liquid food, wherein the system comprises a direct heating device, a flash vessel, the condenser, one or more cleaning devices, a liquid separator, and a vacuum pump, the method comprising, while operating the vacuum pump:
operating the direct heating device to create a stream comprising a steam mixture that is fed to the flash vessel;
drawing a gas flow of steam from the stream from the flash vessel to the condenser in which a majority of the gas flow of steam become condensate;
injecting cleaning solution to the gas flow of steam drawn from the flash vessel via the one or more cleaning devices;
drawing the cleaning solution and the condensate from the condenser to the liquid separator; and
separating the cleaning solution and the condensate from the stream by the liquid separator before feeding the stream, from which the cleaning solution and condensate is separated, to the vacuum pump, wherein the liquid separator is arranged between the condenser and the vacuum pump.

As readily appreciated by the person skilled in the art, the system for heat treatment of liquid food may be operating in a production mode in which the heat treatment of the liquid food is provided. The production mode of the system is not part of the present disclosure; however, this may be briefly discussed throughout the application in order to get a better understanding of the disclosure. During production, production equipment of the system may be subjected to great contamination which has to be removed such that a clean and hygienic system for heat treatment of the liquid food is provided. By way of example, the condenser may be subjected to fouling of the liquid food.

The condenser may be a tube heat exchanger in which a majority of the gas flow of steam become condensate as well as the temperature of the stream may be decreased. The condenser may comprise condenser pipes and one or more nozzles which are arranged at an inlet of the condenser pipes. The condenser may be an external condenser. In this context, the term "external" should be interpreted as the condenser is arranged at a distance from the flash vessel, wherein the flash vessel and the condenser are fluidly connected via a pipe section.

The cleaning solution is preferably a liquid cleaning solution. The cleaning solution may comprise water and/or one or more cleaning agents.

Preferably, the cleaning solution is injected to the gas flow of steam prior to entering the condenser. By injecting the cleaning solution to the gas flow of steam, the cleaning solution is able to reach all areas of the condenser which may be subjected to contamination, i.e. fouling of the liquid food. With the disclosure, it is possible to obtain satisfactory cleaning results of the system, and especially of the condenser, in a quick, easy, and efficient. Also, due to the fact that the cleaning is performed in a quick and easy way, means that less time has to be spent on cleaning, which in turn reduces production downtime.

The cleaning solution may be introduced to the system by feeding the cleaning solution from an external cleaning solution tank to the direct heating device. If that is the case, the steam mixture created in the direct heating device may comprise the cleaning solution. The cleaning solution may be introduced to the system by feeding the cleaning solution from the external cleaning solution tank to the one or more cleaning devices. If this is the case, the cleaning solution may be added to the stream when the cleaning solution is injected to the gas flow of steam, wherein the gas flow of steam is part of the stream. The cleaning solution may be introduced to the system by feeding the cleaning solution to other equipment of the system as well.

Preferably, the disclosed cleaning process is an intermediate cleaning process which is performed under aseptic conditions. By being able to perform the intermediate cleaning under aseptic conditions, it is possible to keep the production equipment sterile. This enables that there is no need of sterilizing the system after the cleaning has been performed, which is the normal procedure when a cleaning of the system has been performed. In this context, the term "intermediate cleaning" should be interpreted as a cleaning process of the system, which is performed one or more times during production. When the intermediate cleaning is performed, the production has to be stopped and cleaning solution is circulated through at least the condenser of the system instead of the liquid food. The cleaning solution is preferably circulated one or more times during the intermediate cleaning process. Due to that the cleaning is performed under aseptic conditions, such that the system is kept sterile, the system may be up and running again as soon as the cleaning is finished. As said, this provides for a reduced production downtime at the same time as satisfactory cleaning results are achieved. There is typically performed a full cleaning process of the system after shutdown of the system and a sterilization process of the system before startup, and therebetween, the intermediate cleaning is performed.

In order to ensure that the cleaning is performed under aseptic condition, there is a need for the system to be a vacuum system. This is achieved by having the vacuum pump operating during the cleaning. Thus, the vacuum pump is configured to ensure that the system is a vacuum system both during production and cleaning.

However, when injecting cleaning solution to the gas flow of steam, the fluid flow i.e. liquid/time unit, is much greater compared to the fluid flow of the liquid food during production. The fluid flow is typically too great for the vacuum pump, however, by having the liquid separator arranged between the condenser and the vacuum pump it is possible to eliminate, or at least reduce, the liquid load of the vacuum pump. Thereby, it is possible to inject the cleaning solution to the gas flow of steam, cleaning the condenser and separate the cleaning solution and the condensate from the stream before the remaining stream entering the vacuum pump. This is advantageous as it allows to inject the cleaning solution to the gas flow of steam such that the condenser can be cleaned in a quick, easy, and efficient way.

Thus, by including the liquid separator, which is configured to reduce the liquid load of the vacuum pump, it is possible to operate the vacuum pump when the cleaning is performed. By being able to operate the vacuum pump when the cleaning is performed, it is possible to perform the cleaning under aseptic conditions, and thereby keeping the system sterile, due to the possibilities of having a vacuum system.

Thereby, an efficient and reliable cleaning of the condenser in the system for heat treatment of the liquid food is achieved wherein the production downtime is reduced.

In this context, the term "direct heating device" may be any device capable of increasing a temperature of a liquid or steam in an easy and efficient way, i.e. a device which is configured to heat the liquid or steam. By way of example, the direct heating device may be a steam injector or a steam infuser.

As readily appreciated by the person skilled in the art, the flash vessel should be interpreted as a vessel capable of performing flash evaporation (or partial evaporation). Flash evaporation (or partial evaporation) is the partial vapor that occurs when a saturated liquid stream, i.e. the stream, undergoes a reduction in pressure by passing through a throttling valve or other throttling device. Preferably, a part of the stream "flashes" into vapor in the flash vessel. Both the vapor and the residual of the stream are cooled to the saturation temperature of the stream at the reduced pressure.

During production, one purpose of the flash vessel is to expel water from the liquid food. Thus, when the liquid food is introduced via the direct heating device, the liquid food dilutes in the direct heating device. Having the flash vessel which is able to expel water from the liquid food, the flash vessel is advantageous as it is capable of restoring the liquid food as it was before being diluted in the direct heating device. Another purpose of the flash vessel during production is to quickly decrease the temperature of the liquid food. By way of example, the temperature of the liquid food is increased by the steam injector to approximately 140 degrees Celsius and the temperature of the liquid food is decreased in the flash vessel to approximately 70-80 degrees Celsius. This is advantageous as high temperature of the liquid food affect the taste of the liquid food in a bad way. Hence, by increasing the temperature of the liquid food, there is less impact on the taste.

During cleaning, one purpose of the flash vessel is to create the gas flow of steam which is configured to be drawn from the flash vessel to the condenser.

The method may further comprise, when the cleaning solution and the condensate have been separated from the stream, collecting the cleaning solution and the condensate at a lower part of the liquid separator. This is advantageous as it enables for the liquid separator to separate the cleaning solution and the condensate from the stream in an easy and efficient way such that the stream may be drawn from the liquid separator at an upper part thereof. As said, by being able to separate the cleaning solution and the condensate, i.e. the liquid parts of the stream, it is possible to only feed the remaining part of the stream to the vacuum pump, being parts which the vacuum pump is able to handle.

The method may further comprise, when the cleaning solution and the condensate have been separated from the stream, emptying the cleaning solution and the condensate from the liquid separator via a bottom outlet of the liquid separator by using a pump. The liquid separator may comprise a vortex breaker at a bottom part thereof configured to stop a formation of a vortex when the cleaning solution and the condensate is drained from the liquid separator. The pump may be a liquid ring pump or a centrifugal pump. The pump is preferably a self-priming pump.

The liquid separator may be a cyclone separator. Cyclonic separation is a method of removing particulates from an air, gas, or liquid stream though vortex separation but also fine droplets of liquid from a gaseous stream. This is advantageous in that it allows to separate the cleaning solution and the condensate from the stream in an efficient way.

The gas flow velocity of the gas flow of steam may be 10-100 m/s, preferably 20-40 m/s.

When the cleaning solution has been injected to the gas flow of steam drawn from the flash vessel, the method may further comprise carrying the cleaning solution with the gas flow of the steam passing through the condenser. This is advantageous as it enables for the cleaning solution to be introduced in all areas of the system where cleaning is necessary in an easy and efficient way. The cleaning solution may be introduced to the areas in an efficient way due to that the gas flow of steam is able to carry the cleaning solution through the system, and especially through the condenser. Thus, by injecting the cleaning solution to the gas flow of steam, wherein the gas flow of steam is able to carry the cleaning solution through the condenser, it is possible to reach areas which would have been impossible, or at least almost impossible, otherwise. Due to the high velocity, the cleaning device become an injector in the gas flow such that the gas flow of steam is able to carry the cleaning solution through the condenser to all areas which the gas flow is able to reach. By being able to inject the cleaning solution to the high velocity gas flow, it is an economically advantageous solution but also an efficient solution for cleaning the condenser. By way of example, it is possible to reach the high velocity due to that the system is a vacuum system.

The method may further comprise, prior to injecting the cleaning solution to the one or more cleaning devices, drawing the cleaning solution from the flash vessel to the one or more cleaning devices.

According to this embodiment, the cleaning solution is typically introduced to the system via the direct heating device, wherein the cleaning solution is fed from the direct heating device to the flash vessel and from the flash vessel to the one or more cleaning devices. It should be noted that the cleaning solution may be fed through other and/or different components/equipment comprised in the system as well. This is advantageous in that it is possible to feed the cleaning solution in same pipe sections, and through same equipment, as the liquid food is fed during production. The cleaning process may cover a plurality of equipment of the system.

The method may further comprise reintroducing the emptied cleaning solution and condensate to the direct heating device via a reintroducing feed line. This is advantageous as it allows for a more environmentally friendly cleaning method in which the cleaning solution is used more than once such that a reduced amount of cleaning solution is needed for cleaning the system. The cleaning solution is preferably introduced to the direct heating device, upstream the direct heating device. The cleaning solution may be reintroduced to the direct heating device if the cleaning solution were introduced via the direct heating device from the beginning.

The method may further comprise, prior to injecting the cleaning solution to the gas flow of steam, opening a first cleaning device valve arrangement configured to direct the cleaning solution to a first and/or a second cleaning device being arranged in vicinity of an inlet of the condenser such that the cleaning solution may be injected to the gas flow of steam via the first and/or the second cleaning device prior to entering the condenser. This is advantageous in that the cleaning solution is injected to the gas flow of steam prior to entering the condenser such that areas of the condenser may be cleaned as previously discussed. Having the first cleaning device and/or the second cleaning device enables a flexible cleaning method in which the cleaning solution may be injected to different parts of the system. The system may comprise further cleaning device valve arrangements configured to control further cleaning devices of the system.

The method may further comprise, prior to feeding the stream to the flash vessel, feeding the stream through a heating device such that the temperature of the stream is increased. The term heating device may be any device capable of increasing the temperature of the stream. Preferably, the temperature of the stream is increased by the direct heating device and thereafter increased even further by the heating device. This is advantageous such that a desired temperature of the stream may be reached in an easy and efficient way prior to entering the flash vessel.

The temperature of the stream may be at least 130 degrees Celsius prior to entering the flash vessel. Thus, the direct heating device itself may be capable of heating the stream to at least 130 degrees Celsius. Additionally, or alternatively, the direct heating device and the heating device may together be capable of heating the stream to at least 130 degrees Celsius. This is advantageous such that the aseptic cleaning of the system is possible.

The method may further comprise opening a by-pass valve arrangement configured to control the stream to by-pass the liquid collector via a by-pass line. This is especially advantageous during production in which there is no need to separate liquid from the stream being drawn from the condenser to the vacuum pump. Thus, when the system is in the production mode, the vacuum pump is able to handle the liquid load and therefore, there is no need of drawing the stream from the condenser to the liquid collector. This enables that both production and cleaning of the system may be performed in an easy and efficient way.

According to a second aspect, it is provided a system for heat treatment of liquid food. The system comprising:
a direct heating device configured to create a stream comprising a steam mixture;
a flash vessel;
a condenser in which a majority of a gas flow of steam become condensate, wherein the gas flow of steam is drawn from the stream from the flash vessel to the condenser;
one or more cleaning devices for introducing a cleaning solution to the gas flow of steam;
a vacuum pump; and
a liquid separator configured to separate the cleaning solution and the condensate from the stream, wherein the liquid separator is arranged between the condenser and the vacuum pump.

The system may further comprise a by-pass valve arrangement which may be configured to control the stream to by-pass the liquid separator via a by-pass line being arranged between the condenser and the vacuum pump.

At least one of the one or more cleaning devices may be arranged at an inlet of the condenser.

Effects and features of the second and third aspects are largely analogue to those described above in connection with the first aspect.

Still other objectives, features, aspects, and advantages will appear from the following detailed description as well as from the drawings.

### Brief Description of the Drawings

Embodiments will now be described, by way of example, with reference to the accompanying schematic drawings, in which
Fig. 1A is a flowchart illustrating a first embodiment of a system for heat treatment of liquid food.
Fig. 1B is a flowchart illustrating a second embodiment of a system for heat treatment of liquid food.
Fig. 2 is a flowchart illustrating steps of a method for performing cleaning of a condenser in a system for heat treatment of liquid food.

### Detailed description

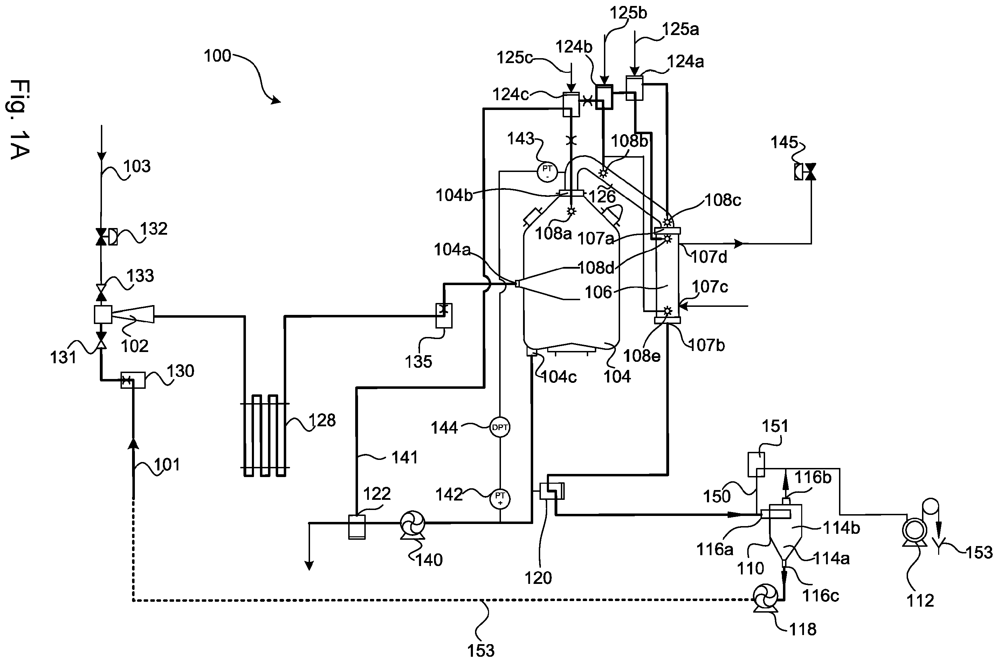

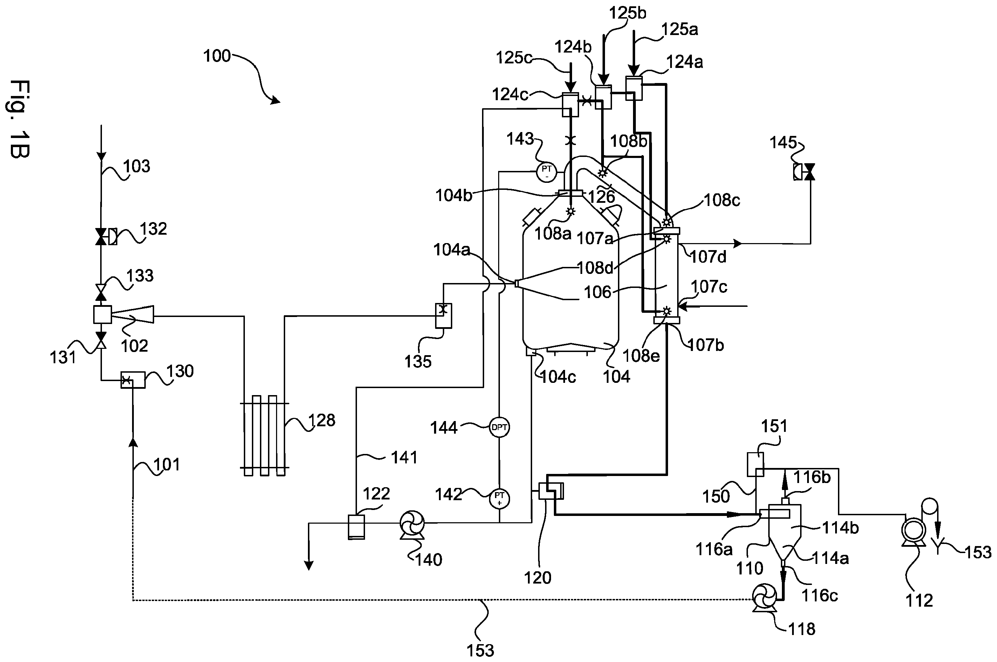

With reference to Fig. 1A and 1B, a flowchart of a system 100 for heat treatment of liquid food is illustrated by way of example. The system 100 is preferably an ultra-high temperature (UHT) system. The system 100 is illustrated in a highly simplified manner in which only parts relevant for understanding how to perform cleaning of a condenser 106 of the system 100 is integrated in the depicted system 100. Hence, it is to be understood that the system 100 typically comprises further parts not shown or described in the following disclosure.

The system 100 comprises a direct heating device 102, a heating device 128, a flash vessel 104, a condenser 106, one or more cleaning devices 108a-e, a liquid separator 110 and a vacuum pump 112. In addition to this equipment, the system 100 also comprises a plurality of pumps, valve arrangements and valves configured to control a flow of the liquid food or a cleaning solution by way of example. The equipment/components will be discussed in further detail below but in short, during production, the direct heating device 102 is configured to receive the liquid food via a product inlet line 101 and a steam via a steam inlet line 103. The direct heating device 102 is configured to create a stream comprising a mixture of the liquid food and the steam, and as a consequence, increasing a temperature of the liquid food. The stream is fed to the flash vessel 104, via the heating device 128 which is configured to increase the temperature of the stream even further prior to entering the flash vessel 104. The stream enters the flash vessel via a flash vessel inlet 104a. In the flash vessel 104, the stream pressure decreases, and consequently the temperature of the stream decreases, wherein the liquid food is emptied from the flash vessel 104 at a bottom outlet 104c of the flash vessel 104. A gas flow of steam which typically comprises some parts of liquid food is drawn from the flash vessel 104, via an upper outlet 104b of the flash vessel 104, to the condenser 106. Thereafter, the gas flow of steam is drawn from the condenser 106 to the vacuum pump 112. During production, the condenser 106 is subjected for fouling of the liquid food.

A cleaning process of the system 100 has to be performed at predefined time intervals to ensure that equipment of the system 100 fulfills requirements for hygienic food processing, i.e. the fouling of the liquid food in the condenser has to be removed. Preferably, the cleaning process is carried out without dismantling the system 100. Regarding the depicted system 100, it is possible to perform a short intermediate cleaning of the system 100 under aseptic conditions, also known as aseptic intermediate cleaning (AIC), that keeps the system sterile during the intermediate cleaning.

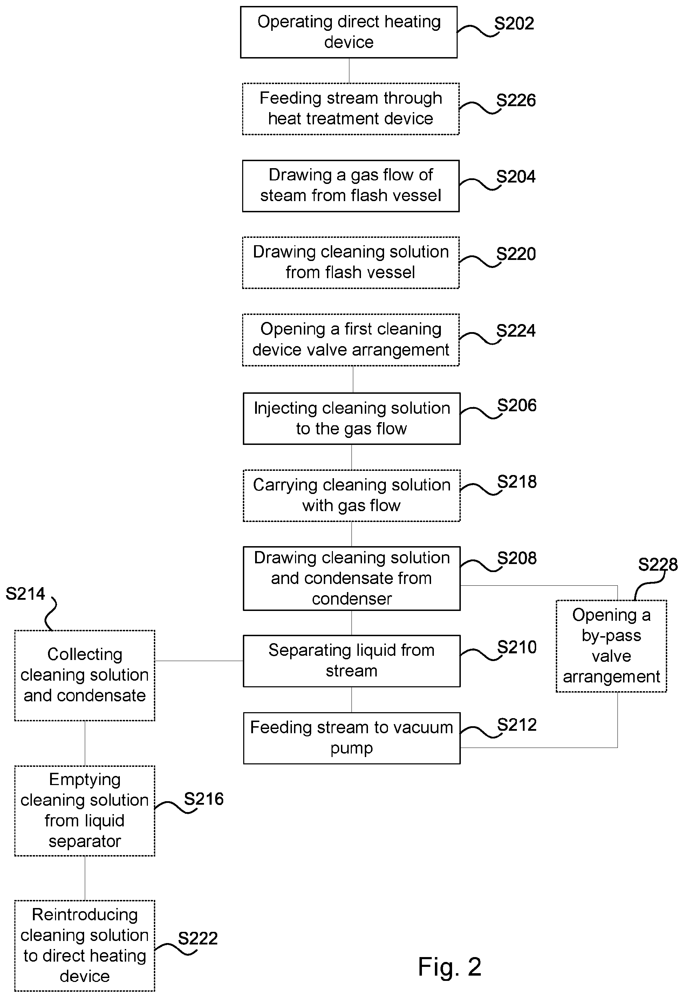

With reference to Fig. 2, a flowchart illustrating a method 200 for performing cleaning of the condenser 106 in the system 100 as discussed in connection with Fig. 1A is illustrated by way of example. The cleaning is preferably an intermediate cleaning of the condenser 106.

Referring back to Figs 1A and 1B, before the cleaning is started, the cleaning solution is introduced to either the direct heating device 102 (as illustrated in Fig. 1A) or to the one or more cleaning devices 108a-e (as illustrated in Fig. 1B) from an external cleaning solution tank (not illustrated). Preferably, the cleaning solution is a liquid cleaning solution. The cleaning solution may comprise water and/or one or more cleaning agents. The thick lines in Fig. 1A respective 1B illustrate the lines in the system 100 where the cleaning solution is present during the cleaning of the condenser 106 in the system 100 depending on where in the system 100 the cleaning solution is introduced.

As best illustrated in Fig. 2, the method 200 comprises, in a first step S202, operating the direct heating device 102 to create a stream, wherein the stream comprises a steam mixture. The stream is preferably fed to the flash vessel 104. The direct heating device 102 may be any device which is capable of creating such stream and preferably, a device which is capable of increasing a temperature of an incoming liquid/steam. By way of example, the direct heating device 102 may be a steam injector or a steam infuser.

As best illustrated in Fig. 1A, the cleaning solution is introduced to the direct heating device 102 via the product inlet line 101, wherein, in the direct heating device 102, the cleaning solution is mixed with steam provided to the direct heating device 102 via the steam inlet line 103. The direct heating device 102 is configured to create the stream which comprises the steam mixture, which in this case comprises cleaning solution and steam. The system 100 comprises a product inlet pump 130 and a product inlet valve 131 which are configured to control a flow of the cleaning solution which is fed to the direct heating device 102. The system 100 comprises a steam inlet pump 132 and a steam inlet valve 133 configured to control a flow of the steam which is fed to the direct heating device 102.

With reference to Fig. 1B, the stream created by the direct heating device 102 does not comprise the cleaning solution because the cleaning solution is introduced to the system 100 at a later stage which were previously discussed and which will be further discussed below.

Optionally, as depicted in Figs 1A and 1B, the method 200 may further comprise feeding S226 the stream through the heating device 128 such that the temperature of the stream is increased even further. It should however be noted that the heating device 128 may be excluded from the system 100 as well.

As further depicted in Figs 1A and 1B, the stream is fed from the heating device 128 to the flash vessel 104 via a flash vessel pump 135 configured to control the flow of the stream. The flash vessel 104 may be configured to receive the stream from the direct heating device 102 although not illustrated. The flash vessel 104 is configured to receive the stream via the flash vessel inlet 104a. The temperature of the stream may be at least 130 degrees Celsius when entering the flash vessel. Thus, the direct heating device 102 itself may be capable of heating the stream to at least 130 degrees Celsius. Additionally, or alternatively, the direct heating device 102 and the heating device 128 may together be capable of heating the stream to at least 130 degrees Celsius.

With reference to Figs 1A, 1B and 2, the method 200 further comprises, in a second step S204, drawing a gas flow of steam from the stream from the flash vessel 104 to the condenser 106 in which a majority of the gas flow of steam become condensate. The gas flow of steam is drawn from the flash vessel 104 via an upper flash vessel outlet 104b, through a pipe section 126, to the condenser 106. The pipe section 126 fluidly connects the upper flash vessel outlet 104b and the condenser 106 such that the gas flow of steam may be drawn from the flash vessel 104 to the condenser 106.

Optionally, if the stream comprises the cleaning solution, the method 200 may further comprise drawing S220 cleaning solution from the flash vessel, via a lower flash vessel outlet 104c, to the one or more cleaning devices 108a-e. The cleaning solution is fed from the flash vessel 104 to the one or more cleaning devices 108a-e via a liquid feed line 141. The cleaning solution is further fed via a liquid pump 140 and a liquid valve arrangement 122. The liquid valve arrangement 122 is configured to direct the cleaning solution either to the liquid feed line 141 or to a drain (not illustrated in the figure). If the cleaning solution is directed to the drain, it is discharged from the system 100 via the drain. The system 100 further comprises a first pressure measurement device 142 and a second pressure measurement device 143 configured to determine the pressure of the cleaning solution at different positions of the liquid feed line 141 when being fed in the liquid feed line 141. The system 100 further comprises a pressure controlling device 144 configured to determine a pressure difference based on the measurements provided by the first and second pressure measurement devices 142, 143. The pressure controlling device 144 may control the liquid pump 140 based on the determined pressure difference.

The system 100 comprises five cleaning devices 108a-e. One cleaning device 108a is arranged adjacent the upper flash vessel outlet 104b of the flash vessel 104. A further cleaning device 108b is arranged in a pipe section 126 between the flash vessel 104 and the condenser 106. Two further cleaning devices 108c-d are arranged at an inlet 107a of the condenser 106 or at least in vicinity to the inlet 107a. One yet further cleaning device 108e is arranged at an outlet 107b of the condenser 106 or at least in vicinity to the outlet 107b.

The system 100 comprises three cleaning device valve arrangements 124a-c being configured to control the flow of the cleaning solution and specially to control to which cleaning device(s) 108a-e the cleaning solution should be fed, wherein the cleaning solution is fed from either the flash vessel 104 or from the external cleaning solution tank. Thus, if the cleaning solution has not been introduced to the system 100 already, this is typically where the cleaning solution is introduced to the system 100.

As best illustrated in Fig. 1B, if the cleaning solution is introduced to the system 100 via the one or more cleaning devices 108a-e, the cleaning solution is fed in one or more inlet lines 125a-c, from the external cleaning solution tank, via one or more of the cleaning device valve arrangements 124a-c to the one or more of the one or more cleaning devices 108a-e.

With reference to Figs 1A, 1B and 2, the method 200 further comprising, in a third step S206, injecting the cleaning solution to the gas flow of steam drawn from the flash vessel 104 via the one or more cleaning devices 108a-e. The cleaning solution is preferably injected to the gas flow of steam prior to entering the condenser 106.

The gas flow of steam flows with a velocity of approximately 30 m/s. The gas flow of steam may flow with different velocities, such as 10-100 m/s, preferably 20-40 m/s.

Optionally, the method may further comprises carrying S216 the cleaning solution with the gas flow of the steam passing through the condenser 106. The gas flow of steam is able to carry the cleaning solution through the condenser 106 when the cleaning solution is injected to the gas flow of steam. In this way, the cleaning solution is able to reach all areas within the condenser 106 which has to be cleaning during the intermediate cleaning process. In the condenser 106, a majority of the gas flow of steam become condensate.

Optionally, the method 200 may further comprise, prior to injecting S206 the cleaning solution to the gas flow of steam, opening S224 the first cleaning device valve arrangement 124a configured to direct the cleaning solution to a first and/or a second cleaning device 108c-d such that the cleaning solution is injected to the gas flow of steam via the first and/or the second cleaning device 108c-d prior to entering the condenser 106. The first and second cleaning devices 108c-d are arranged in vicinity of the inlet 107a of the condenser 106. It should be noted that at least one of the cleaning devices 108a-e preferably is arranged in vicinity of the inlet 107a of the condenser 106. As previously said, and as depicted in Figs 1A and 1B, the system 100 comprises further cleaning device valve arrangements 124b-c configured to control further cleaning devices 108a-b, e.

The condenser 106 may by way of example be a tube heat exchanger or the like. The condenser 106 may comprise condenser pipes and one or more nozzles which are arranged at an inlet of the condenser pipes (not illustrated). The condenser 106 may be an external condenser. In this context, the term "external" should be interpreted as the condenser is arranged at a distance from the flash vessel 104, wherein the flash vessel 104 and the condenser 106 are fluidly connected via the pipe section 126. In addition to the inlet 107a and outlet 107b, the condenser 106 further comprises a cooling media inlet 107c and a cooling media outlet 107d. The cooling media inlet 107c is arranged in vicinity to the outlet 107b and the cooling media outlet 107d is arranged in vicinity to the inlet 107a. Preferably, the cooling media has a lower temperature when entering the condenser 106 via the cooling media inlet 107c compared to when leaving the condenser 106 via the cooling media outlet 107d. The system 100 comprises a cooling media control valve 145 upstream the cooling media outlet 107d configured to control a cooling media flow leaving the condenser 106.

With reference to Figs 1A, 1B and 2, the method 200 further comprising, in a fourth step S208, drawing the cleaning solution and the condensate from the condenser 106 to the liquid separator 110. The cleaning solution and the condensate is drawn from the condenser 106 to a liquid separator 110 via a valve arrangement 120. The valve arrangement 120 is configured to control the flow of the cleaning solution and the condensate to either the liquid separator 110 or to the liquid valve arrangement 122, preferably to the liquid separator 110. The cleaning solution and the condensate is drawn to the liquid separator 110 through a liquid separator inlet 116a. The liquid separator 110 is configured to separate the cleaning solution and the condensate from the stream.

Optionally, the method 200 may further comprise collecting S214 the cleaning solution and the condensate separated from the stream at a lower part 114a of the liquid separator 110.

Optionally, the method 200 may further comprise emptying S216 the cleaning solution and the condensate from the liquid separator 110 via a bottom outlet 116c of the liquid separator 110 by using a pump 118. The bottom outlet 116c being arranged in the lower part 114a of the liquid separator 110. The pump 118 being arranged downstream the liquid separator 110, wherein the pump 118 is configured to assist in emptying the cleaning solution and the condensate from the liquid separator 110. The liquid separator 110 may comprise a vortex breaker at a bottom part thereof configured to stop a formation of a vortex when the cleaning solution and the condensate is drained from the liquid separator 110. The pump 118 may be a liquid ring pump or a centrifugal pump. The pump 118 is preferably a self-priming pump. The liquid 110 separator is preferably a cyclone separator.

As best illustrated in Fig. 1A and 2, optionally, the method 200 may further comprise reintroducing S222 the emptied cleaning solution and condensate to the direct heating device 102 via a reintroducing line 153. This is possible if the cleaning solution was introduced to the system 100 via the product inlet line 101 from the beginning (as illustrated in Fig. 1A). Alternatively, the cleaning solution and the condensate may be fed to a drain (not illustrated) and thereby discharged from the system 100.

The method 200 further comprising feeding S212 the stream, from which the cleaning solution and the condensate is separated, to the vacuum pump 112. The remining stream is fed S212 to the vacuum pump 112 via an upper outlet 116b arranged in an upper part 114b of the liquid separator 110. The vacuum pump 112 is connected to a drain 153 to which the stream is fed from the vacuum pump 112.

Thus, the liquid separator 110 is arranged between the condenser 106 and the vacuum pump 112.

Preferably, the intermediate cleaning is performed by circulating the cleaning solution one or more times through the system 100 and/or providing additional cleaning solution one or more times to the system 100 in order to obtain a satisfactory cleaning result.

With reference to Figs 1A and 1B, the system 100 further comprise a by-pass control valve arrangement 151 configured to control the stream. The by-pass control valve arrangement 151 may be configured to control the stream to by-pass the liquid collector 110 via a by-pass line 150 to the vacuum pump 112. This is preferably used during production where there is no need of separating liquid from the stream prior to feeding the stream to the vacuum pump 112.

With reference to Fig. 2, the method 200 may optionally further comprise opening S228 the by-pass valve arrangement 151 configured to control the stream to by-pass the liquid collector via a by-pass line 150.

Preferably, the steps are performed while the vacuum pump 112 is operating such that a vacuum system is maintained.

Even though the method steps are illustrated and described in a certain order, other orders may also be used.

From the description above follows that, although various embodiments of the invention have been described and shown, the invention is not restricted thereto, but may also be embodied in other ways within the scope of the subject-matter defined in the following claims.

## Claims

1. A method (200) for performing cleaning of a condenser (106) in a system (100) for heat treatment of liquid food, wherein the system (100) comprises a direct heating device (102), a flash vessel (104), the condenser (106), one or more cleaning devices (108a-e), a liquid separator (110) and a vacuum pump (112), the method (200) comprising, while operating the vacuum pump (112):
operating (S202) the direct heating device (102) to create a stream comprising a steam mixture that is fed to the flash vessel (104);
drawing (S204) a gas flow of steam from the stream from the flash vessel (104) to the condenser (106) in which a majority of the gas flow of steam become condensate;
injecting (S206) cleaning solution to the gas flow of steam drawn from the flash vessel (104) via the one or more cleaning devices (108a-e);
drawing (S208) the cleaning solution and the condensate from the condenser (106) to the liquid separator (110); and
separating (S210) the cleaning solution and the condensate from the stream by the liquid separator (110) before feeding (S212) the stream, from which the cleaning solution and condensate is separated, to the vacuum pump (112), wherein the liquid separator (110) is arranged between the condenser (106) and the vacuum pump (112).

2. The method (200) according to claim 1, further comprising, when the cleaning solution and the condensate have been separated from the stream, collecting (S214) the cleaning solution and condensate separated from the stream at a lower part (114a) of the liquid separator (110).

3. The method (200) according to any one of the preceding claims, further comprising, when the cleaning solution and the condensate have been separated from the stream, emptying (S216) the cleaning solution and the condensate from the liquid separator (110) via a bottom outlet (116a) of the liquid separator (110) by using a pump (118).

4. The method (200) according to any one of the preceding claims, wherein the liquid separator (110) is a cyclone separator.

5. The method according to any one of the preceding claims, wherein the gas flow velocity of the gas flow of steam is 10-100 m/s, preferably 20-40 m/s.

6. The method (200) according to any one of the preceding claims, wherein, when the cleaning solution has been injected to the gas flow of steam drawn from the flash vessel (104), the method further comprising carrying (S218) the cleaning solution with the gas flow of the steam passing through the condenser (106).

7. The method (200) according to anyone of the preceding claims, further comprising, prior to injecting (S206) the cleaning solution to the one or more cleaning devices (108a-e) drawing (S220) the cleaning solution from the flash vessel (104) to the one or more cleaning devices (108a-e).

8. The method (200) according to any one of claims 3 to 7, further comprising reintroducing (S222) the emptied cleaning solution and condensate to the direct heating device (102) via a reintroducing feed line (153).

9. The method (200) according to any one of the preceding claims, further comprising, prior to injecting (S206) the cleaning solution to the gas flow of steam, opening (S224) a first cleaning device valve arrangement (124a) configured to direct the cleaning solution to a first and/or a second cleaning device (108c-d) being arranged in vicinity of an inlet (107a) of the condenser (106) such that the cleaning solution is injected to the gas flow of steam via the first and/or the second cleaning device (108c-d) prior to entering the condenser (106).

10. The method (200) according to any one of the preceding claims, further comprising, prior to feeding the stream to the flash vessel (104), feeding (S226) the stream through a heating device (128) such that the temperature of the stream is increased.

11. The method (200) according to any one of the preceding claims, wherein the temperature of the stream is at least 130 degrees Celsius prior to entering the flash vessel (104).

12. The method (200) according to any one of the preceding claims, further comprising opening (S228) a by-pass valve arrangement (151) configured to control the stream to by-pass the liquid collector via a by-pass line (150).

13. A system (100) for heat treatment of liquid food, the system (100) comprising:
a direct heating device (102) configured to create a stream comprising a steam mixture;
a flash vessel (104);
a condenser (106) in which a majority of a gas flow of steam become condensate, wherein the gas flow of steam is drawn from the stream from the flash vessel (104) to the condenser (106);
a vacuum pump (112); **characterised by**
one or more cleaning devices (108a-e) for introducing a cleaning solution to the gas flow of steam; and
a liquid separator (110) configured to separate the cleaning solution and the condensate from the stream, wherein the liquid separator (110) is arranged between the condenser (106) and the vacuum pump (112).

14. The system (100) according to claim 13, further comprising a by-pass valve arrangement (151) configured to control the stream to by-pass the liquid separator (110) via a by-pass line (150) being arranged between the condenser (106) and the vacuum pump (112).

15. The system (100) according to any one of claims 13 or 14, wherein at least one of the one or more cleaning devices (108a-e) is arranged in vicinity of an inlet (107a) of the condenser (106).

## Patentansprüche

1. Verfahren (200) zum Durchführen einer Reinigung eines Kondensators (106) in einem System (100) zur Wärmebehandlung von flüssigem Lebensmittel, wobei das System (100) eine Direktheizvorrichtung (102), einen Entspannungsbehälter (104), den Kondensator (106), eine oder mehrere Reinigungsvorrichtungen (108a-e), einen Flüssigkeitsabscheider (110) und eine Vakuumpumpe (112) umfasst, wobei das Verfahren (200) während des Betriebs der Vakuumpumpe (112) Folgendes umfasst:
Betreiben (S202) der Direktheizvorrichtung (102), um einen Strom zu erzeugen, der ein Dampfgemisch umfasst, das dem Entspannungsbehälter (104) zugeführt wird;
Abziehen (S204) eines Dampfgasstroms aus dem Strom aus dem Entspannungsbehälter (104) zum Kondensator (106), in dem ein Großteil des Dampfgasstroms zu Kondensat wird;
Injizieren (S206) von Reinigungslösung in den Dampfgasstrom, der aus dem Entspannungsbehälter (104) über die eine oder die mehreren Reinigungsvorrichtungen (108a-e) abgezogen wird;
Abziehen (S208) der Reinigungslösung und des Kondensats aus dem Kondensator (106) zum Flüssigkeitsabscheider (110); und
Abtrennen (S210) der Reinigungslösung und des Kondensats aus dem Strom durch den Flüssigkeitsabscheider (110) vor Zuführen (S212) des Stroms, aus dem die Reinigungslösung und das Kondensat abgetrennt werden, zur Vakuumpumpe (112), wobei der Flüssigkeitsabscheider (110) zwischen dem Kondensator (106) und der Vakuumpumpe (112) angeordnet ist.

2. Verfahren (200) nach Anspruch 1, ferner umfassend, wenn die Reinigungslösung und das Kondensat von dem Strom getrennt wurden, Sammeln (S214) der Reinigungslösung und des Kondensats, die von dem Strom getrennt wurden, an einem unteren Teil (114a) des Flüssigkeitsabscheiders (110).

3. Verfahren (200) nach einem der vorhergehenden Ansprüche, ferner umfassend, wenn die Reinigungslösung und das Kondensat von dem Strom getrennt wurden, Ablassen (S216) der Reinigungslösung und des Kondensats aus dem Flüssigkeitsabscheider (110) über einen Bodenauslass (116a) des Flüssigkeitsabscheiders (110) unter Verwendung einer Pumpe (118).

4. Verfahren (200) nach einem der vorhergehenden Ansprüche, wobei der Flüssigkeitsabscheider (110) ein Zyklonabscheider ist.

5. Verfahren nach einem der vorhergehenden Ansprüche, wobei die Gasströmungsgeschwindigkeit des Dampfgasstroms 10-100 m/s, vorzugsweise 20-40 m/s beträgt.

6. Verfahren (200) nach einem der vorhergehenden Ansprüche, wobei, wenn die Reinigungslösung in den Dampfgasstrom injiziert wurde, der aus dem Entspannungsbehälter (104) abgezogen wird, das Verfahren ferner das Transportieren (S218) der Reinigungslösung mit dem durch den Kondensator (106) strömenden Dampfgasstrom umfasst.

7. Verfahren (200) nach einem der vorhergehenden Ansprüche, das ferner vor dem Injizieren (S206) der Reinigungslösung in die eine oder die mehreren Reinigungsvorrichtungen (108a-e) das Abziehen (S220) der Reinigungslösung aus dem Entspannungsbehälter (104) in die eine oder die mehreren Reinigungsvorrichtungen (108a-e) umfasst.

8. Verfahren (200) nach einem der Ansprüche 3 bis 7, ferner umfassend das Wiedereinführen (S222) der abgelassenen Reinigungslösung und des abgelassenen Kondensats in die Direktheizvorrichtung (102) über eine Wiedereinführungszuleitung (153).

9. Verfahren (200) nach einem der vorhergehenden Ansprüche, ferner umfassend, vor dem Injizieren (S206) der Reinigungslösung in den Dampfgasstrom, Öffnen (S224) einer ersten Reinigungsvorrichtungsventilanordnung (124a), die dazu ausgelegt ist, die Reinigungslösung zu einer ersten und/oder einer zweiten Reinigungsvorrichtung (108c-d) zu leiten, die in der Nähe eines Einlasses (107a) des Kondensators (106) angeordnet sind, sodass die Reinigungslösung über die erste und/oder die zweite Reinigungsvorrichtung (108c-d) vor dem Eintritt in den Kondensator (106) in den Dampfgasstrom injiziert wird.

10. Verfahren (200) nach einem der vorhergehenden Ansprüche, das ferner vor dem Zuführen des Stroms zu dem Entspannungsbehälter (104) Zuführen (S226) des Stroms durch eine Heizvorrichtung (128) umfasst, so dass die Temperatur des Stroms erhöht wird.

11. Verfahren (200) nach einem der vorhergehenden Ansprüche, wobei die Temperatur des Stroms vor dem Eintritt in den Entspannungsbehälter (104) mindestens 130 Grad Celsius beträgt.

12. Verfahren (200) nach einem der vorhergehenden Ansprüche, ferner umfassend Öffnen (S228) einer Umgehungsventilanordnung (151), die dazu ausgelegt ist, den Strom zum Umgehen des Flüssigkeitssammlers über eine Umgehungsleitung (150) zu steuern.

13. System (100) zur Wärmebehandlung von flüssigem Lebensmittel, wobei das System (100) Folgendes umfasst:
eine Direktheizvorrichtung (102), die dazu ausgelegt ist,
einen Strom zu erzeugen, der ein Dampfgemisch umfasst;
einen Entspannungsbehälter (104);
einen Kondensator (106), in dem ein Großteil eines Dampfgasstroms zu Kondensat wird, wobei der Dampfgasstrom aus dem Strom von dem Entspannungsbehälter (104) zu dem Kondensator (106) abgezogen wird;
eine Vakuumpumpe (112); **gekennzeichnet durch** eine oder mehrere Reinigungsvorrichtungen (108a-e) zum Einführen einer Reinigungslösung in den Dampfgasstrom; und
einen Flüssigkeitsabscheider (110), der dazu ausgelegt ist, die Reinigungslösung und das Kondensat aus dem Strom zu trennen, wobei der Flüssigkeitsabscheider (110) zwischen dem Kondensator (106) und der Vakuumpumpe (112) angeordnet ist.

14. System (100) nach Anspruch 13, ferner umfassend eine Umgehungsventilanordnung (151), die dazu ausgelegt ist, den Strom zum Umgehen des Flüssigkeitsabscheiders (110) über eine Umgehungsleitung (150) zu steuern, die zwischen dem Kondensator (106) und der Vakuumpumpe (112) angeordnet ist.

15. System (100) nach einem der Ansprüche 13 oder 14, wobei mindestens eine der einen oder mehreren Reinigungsvorrichtungen (108a-e) in der Nähe eines Einlasses (107a) des Kondensators (106) angeordnet ist.

## Revendications

1. Procédé (200) pour réaliser le nettoyage d'un condenseur (106) dans un système (100) de traitement thermique d'aliments liquides, le système (100) comprenant un dispositif de chauffage direct (102), un ballon de détente (104), le condenseur (106), un ou plusieurs dispositifs de nettoyage (108a-e), un séparateur de liquide (110) et une pompe à vide (112), le procédé (200) comprenant, tout en faisant fonctionner la pompe à vide (112) :
le fait de faire fonctionner (S202) le dispositif de chauffage direct (102) pour créer un flux comprenant un mélange de vapeur qui alimente le ballon de détente (104) ;
l'aspiration (S204) d'un écoulement gazeux de vapeur du flux provenant du ballon de détente (104) jusqu'au condenseur (106) dans lequel une majorité de l'écoulement gazeux de vapeur devient un condensat ;
l'injection (S206) de solution de nettoyage dans l'écoulement gazeux de vapeur aspiré du ballon de détente (104) via les ou un ou plusieurs dispositifs de nettoyage (108a-e) ;
l'aspiration (S208) de la solution de nettoyage et du condensat provenant du condenseur (106) jusqu'au séparateur de liquide (110) ; et
la séparation (S210) de la solution de nettoyage et du condensat du flux par le séparateur liquide (110) avant d'alimenter (S212) le flux, duquel la solution de nettoyage et le condensat sont séparés, jusqu'à la pompe à vide (112), le séparateur liquide (110) étant agencé entre le condenseur (106) et la pompe à vide (112).

2. Procédé (200) selon la revendication 1, comprenant en outre, lorsque la solution de nettoyage et le condensat ont été séparés du flux, la collecte (S214) de la solution de nettoyage et du condensat séparés du flux au niveau d'une partie inférieure (114a) du séparateur de liquide (110).

3. Procédé (200) selon l'une quelconque des revendications précédentes, comprenant en outre, lorsque la solution de nettoyage et le condensat ont été séparés du flux, le vidage (S216) de la solution de nettoyage et du condensat du séparateur de liquide (110) via une sortie de fond (116a) du séparateur de liquide (110) en utilisant une pompe (118).

4. Procédé (200) selon l'une quelconque des revendications précédentes, dans lequel le séparateur de liquide (110) est un séparateur à cyclone.

5. Procédé selon l'une quelconque des revendications précédentes, dans lequel la vitesse d'écoulement de gaz de l'écoulement gazeux de vapeur est de 10 à 100 m/s, de préférence de 20 à 40 m/s.

6. Procédé (200) selon l'une quelconque des revendications précédentes, dans lequel, lorsque la solution de nettoyage a été injectée dans l'écoulement gazeux de vapeur aspiré du ballon de détente (104), le procédé comprenant en outre le transport (S218) de la solution de nettoyage avec l'écoulement gazeux de la vapeur passant à travers le condenseur (106).

7. Procédé (200) selon l'une quelconque des revendications précédentes, comprenant en outre, avant d'injecter (S206) la solution de nettoyage dans les un ou plusieurs dispositifs de nettoyage (108a-e), l'aspiration (S220) de la solution de nettoyage du ballon de détente (104) jusqu'aux un ou plusieurs dispositifs de nettoyage (108a-e).

8. Procédé (200) selon l'une quelconque des revendications 3 à 7, comprenant en outre la réintroduction (S222) de la solution de nettoyage et du condensat vidés dans le dispositif de chauffage direct (102) via une conduite d'alimentation de réintroduction (153).

9. Procédé (200) selon l'une quelconque des revendications précédentes, comprenant en outre, avant d'injecter (S206) la solution de nettoyage dans l'écoulement gazeux de vapeur, l'ouverture (S224) d'un premier agencement de soupape de dispositif de nettoyage (124a) configuré pour diriger la solution de nettoyage jusqu'à un premier et/ou un second(s) dispositif(s) de nettoyage (108c-d) étant agencé(s) à proximité d'une entrée (107a) du condenseur (106) de telle sorte que la solution de nettoyage soit injectée dans l'écoulement gazeux de vapeur via le premier et/ou le second dispositif(s) de nettoyage (108c-d) avant d'entrer dans le condenseur (106).

10. Procédé (200) selon l'une quelconque des revendications précédentes, comprenant en outre, avant d'alimenter le flux dans le ballon de détente (104), l'alimentation (S226) du flux à travers un dispositif de chauffage (128) de telle sorte que la température du flux soit augmentée.

11. Procédé (200) selon l'une quelconque des revendications précédentes, dans lequel la température du flux est d'au moins 130 degrés Celsius avant d'entrer dans le ballon de détente (104).

12. Procédé (200) selon l'une quelconque des revendications précédentes, comprenant en outre l'ouverture (S228) d'un agencement de soupape de dérivation (151) configuré pour commander le flux pour contourner le collecteur de liquide via une conduite de dérivation (150).

13. Système (100) de traitement thermique d'aliments liquides, le système (100) comprenant :
un dispositif de chauffage direct (102) configuré pour créer un flux comprenant un mélange de vapeur ;
un ballon de détente (104) ;
un condenseur (106) dans lequel une majorité d'un écoulement gazeux de vapeur devient un condensat, l'écoulement gazeux de vapeur étant aspiré du flux du ballon de détente (104) jusqu'au condenseur (106) ;
une pompe à vide (112) ; **caractérisé par** un ou plusieurs dispositifs de nettoyage (108a-e) pour introduire une solution de nettoyage dans l'écoulement gazeux de vapeur ; et
un séparateur de liquide (110) configuré pour séparer la solution de nettoyage et le condensat du flux, le séparateur de liquide (110) étant agencé entre le condenseur (106) et la pompe à vide (112).

14. Système (100) selon la revendication 13, comprenant en outre un agencement de soupape de dérivation (151) configuré pour commander le flux pour contourner le séparateur de liquide (110) via une conduite de dérivation (150) agencée entre le condenseur (106) et la pompe à vide (112).

15. Système (100) selon l'une quelconque des revendications 13 ou 14, dans lequel au moins un des un ou plusieurs dispositifs de nettoyage (108a-e) est agencé à proximité d'une entrée (107a) du condenseur (106).
